# EUROPEAN PATENT SPECIFICATION

(11) **EP 0 458 434 B1**
(45) Date of publication and mention of the grant of the patent: **28.09.1994**
(21) Application number: 91301141.7
(22) Date of filing: 13.02.1991
(51) Int. Cl.: B23B 51/02, B23C 5/18

(54) **Rotary cutter with Diamond-like cutting edges**
Umlaufendes Schneidwerkzeug mit diamantartigen Schneidkanten
Outil coupant rotatif avec arêtes coupantes diamantins

(30) Priority: 24.05.1990 US 527967
(43) Date of publication of application: 27.11.1991
(73) Proprietor: SMITH INTERNATIONAL, INC., Houston, Texas 77032 (US)
(72) Inventor: Packer, Scott M., Utah 84062 (US)
(74) Representative: Enskat, Michael Antony Frank

(56) References cited:
- EP-A- 0 062 693
- US-A- 4 527 643
- US-A- 4 762 445
- US-A- 4 797 241

## Description

This invention relates to rotary cutting tools and more particularly to helically fluted end mills.

Helically fluted end mills are the most commonly used milling tools and are generally required to perform severe machining operations under extremely adverse conditions. The cutting end of a helically fluted end mill includes at least a pair of cutting lips on opposite outside surfaces of the end mill blank.

Oppositely directed cutting surfaces positioned at the cutting end of the mill blank are subjected to axial and torsional loads which create material demands on the fabrication of the milling tool. Obviously the material of the cutting lips should be as hard as possible to cut a work piece and it should be heat resistant as well to maintain the cutting edge of the mill at elevated temperatures. Moreover, the material of the body of the mill blank must be both rigid and tough to resist deflection and to maintain the integrity of the mill under loads while the milling cutter is being used. The foregoing requirements have resulted in compromises in material selection since hard materials tend to be brittle while tough materials tend to wear quite easily.

This invention has application for other types of rotary cutting tools such as router bits, reamers and taps.

The prior art teaches a combination of materials having the characteristics of hardness and wear-resistance at the cutting surfaces and toughness and rigidity of the body and shaft. It has been previously proposed to form the cutting surfaces of one material and the body and shaft of another. This has resulted in a variety of combinations such as cemented tungsten carbide or diamond inserts or tips on carbon steel or cemented tungsten carbide shafts. These combinations while individually useful have a common disadvantage, i.e. the braze connection between the insert or tip and a shaft. Tungsten carbide can be soldered or brazed directly to the steel or carbide shaft. However, a diamond tip or insert must first be adhered to a carbide substrate which is in turn soldered or brazed to the shaft. Diamond particles are typically formed into a compact or PCD (polycrystalline diamond) disc and bonded to a carbide substrate with a metallic catalyst in a high pressure-high temperature press. At atmospheric pressures, however, the metal which catalyzes the bonding of the diamond particles to each other and to the substrate in the press will also catalyze the conversion of diamond to graphite at temperatures above 700°C which will cause disintegration of the PCD compact. Accordingly a low temperature solder or braze connection is used to attach the substrate to the shaft. The aforementioned diamond discs as well as the diamond insert stud blanks, for example, are fabricated from a tungsten carbide substrate with a diamond layer sintered to a face of a substrate, the diamond layer being composed of polycrystalline material.

The synthetic polycrystalline diamond insert is manufactured by Sii Megadiamond, Provo, Utah, a wholly owned subsidiary of Smith International, Inc.

Two examples of patents assigned to Megadiamond describe cutting elements for drilling holes are U.S. Patents Nos. 4,527,643 and 4,627,503. Both of these patents utilize a braze type bonding element to secure the diamond cutters within a drill blank. Typically a low temperature solder or braze connection is used to attach the substrate to a shaft such as the shaft of a helical twist drill. This braze connection limits the effective life of such drilling tools since it is softer than either the substrate or the shaft. The braze thus becomes the weakest point of the tool construction and the limiting factor in the tool usage.

U.S. Patent No. 4,762,445 teaches a helically fluted twist drill in which offset opposed veins of sintered abrasive particulate, such as diamond, are embedded within a drill blank made of a less abrasive material such as carbide. A disadvantage of the foregoing drill is that the veins of diamonds are merely brazed in place on the twist drill and tend to wear out rather quickly.

A rotary cutter having helically extending hard material cutting edges along its length is described in EP-A-0365218 representing the closest prior art in which a paper-thin layer of polycrystalline diamond only 100 micrometers thick is bonded to the cutting edge of a fluted cutting tool. According to this technique the thin layer of polycrystalline diamond is made by vapour deposition on a bar of molybdenum or the like. The molybdenum substrate is placed in hot aqua regia and dissolved to leave just the helical ribbon of diamond. This diamond film is then silver brazed on the rake face of the flute of a cutting tool. The flank face is ground to form a sharp cutting edge.

The present invention overcomes the problems of the foregoing prior art by providing a concentration of polycrystalline material formed in situ in each of a pair of grooves in a milling cutter blank.

A first aspect of the invention provides a rotary cutter having helically extending hard material cutting edges along its length characterized by a rotary cutter blank having at least a pair of helical grooves in side walls of the blank and a hard material selected from the group consisting of polycrystalline diamond and polycrystalline cubic boron nitride within the grooves, the hard material having a cutting edge formed along its leading edge, the polycrystalline hard material being formed in situ within the grooves.

Preferably the body of the rotary cutter is formed of cemented tungsten carbide and has at least a pair of longitudinally extending flutes along its body, the polycrystalline material in each of the grooves forming a leading edge adjacent a flute.

A second aspect of the invention provides a process for forming a rotary cutter comprising the steps of: forming a rotary cutter blank of cemented tungsten carbide, providing a polycrystalline hard material in a helical path along the length of the blank, and forming a cutting edge along a leading edge of the hard material; and characterized by forming at least a pair of longitudinally extending grooves in an outside surface of the blank, filling the grooves with hard material selected from the group consisting of diamond and cubic boron nitride, and pressing the rotary cutter blank at a sufficient pressure to form polycrystalline diamond or polycrystalline cubic boron nitride in situ within the grooves.

The above noted features and advantages of the present invention will be more fully understood upon a study of the following description in conjunction with the detailed drawings.
FIG. 1 is a perspective view of a fluted end mill;
FIG. 2 is an end view taken through 2-2 of FIG. 1;
FIG. 3 is a perspective view of an end mill blank with four helical flutes machined therein;
FIG. 4 is a side view of an end mill blank with a pair of helical flutes 180° one from the other;
FIG. 5 is an end view taken through 5-5 of FIG. 4; and
FIG. 6 is a semi-schematic diagram of the process steps involved to fabricate the end mill cutter.

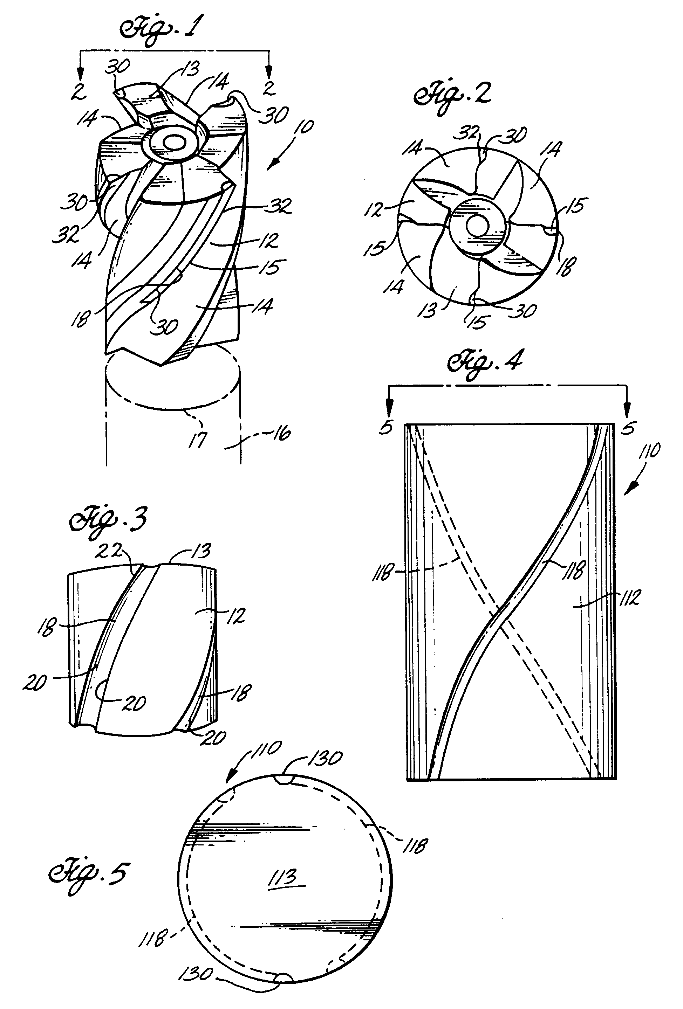

The diamond end mill of Figure 1 generally designated as 10 comprises an end mill blank body 12 having, for example, four longitudinally extending flutes 14 equidistantly spaced circumferentially around the body 12. The body of the end mill may, for example, be fabricated from a hard and tough material such as cemented tungsten carbide. A groove 18 is formed in the leading edge 15 of each of the body portions between the flutes 14. Sintered polycrystalline material 30 is formed in the helically formed groove 18. Cutting edges 32 are ground into the sintered diamond-like material 30 pressed in the grooves adjacent to the flutes of the drill blank 12. The tungsten carbide drill blank may then be metallurgically bonded to a steel or carbide drill shank 16 along juncture 17. The metallurgical bond may, for example, be a braze.

The polycrystalline material in the grooves may be either diamond or cubic boron nitride (CBN). To form polycrystalline diamond in the grooves, they are packed with diamond powder. To form polycrystalline cubic boron nitride, the grooves are packed with cubic boron nitride powder. PCD is used herein as a convenient abbreviation for polycrystalline material, whether diamond or cubic boron nitride.

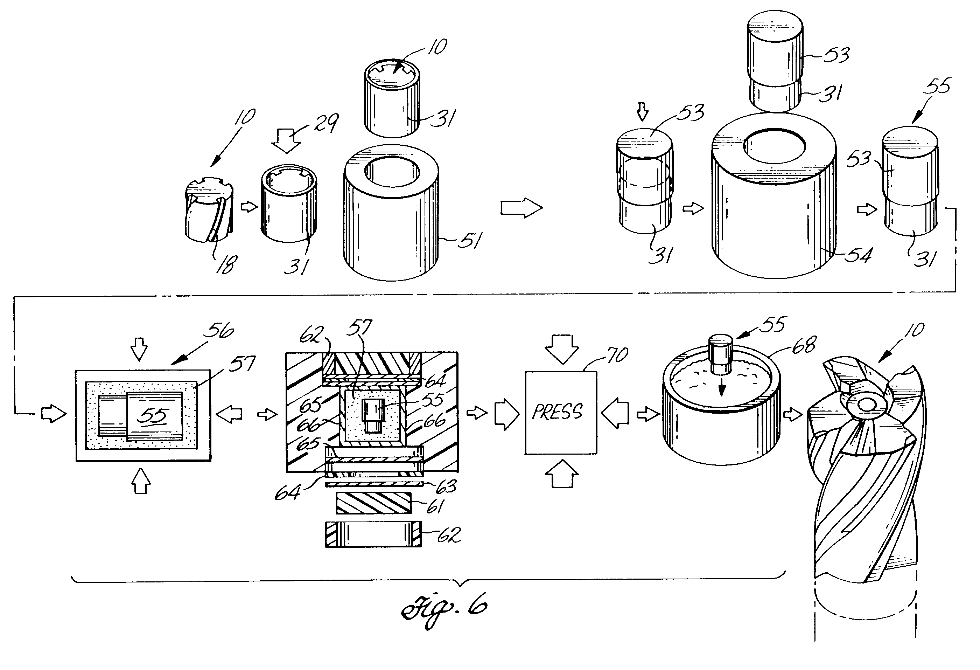

Turning now to Figure 2 the end 13 of the mill further illustrates the grooves forming the leading edge 15 of the metal between the flutes, the polycrystalline material (PCD) being compacted and sintered within the grooves. A cutting edge or lip 32 is ground into the PCD material after the sintering process is complete (the schematically depicted process of Fig. 6).

Turning now to Figure 3 the cemented tungsten carbide cutter blank body is formed with, for example, four helically configured grooves 18 therein. Preferably, the flutes 14 are formed in the body after the diamond-like material is sintered within the groove. The helically formed grooves are equidistantly spaced around the outer circumferential walls of the blank and provide a receptacle for the PCD powder compacted therein. The sides 20 of the helical groove preferably transition into a rounded bottom 22 of the groove. Identical sides 20 are formed in the other grooves. The reason for the rounded bottom of the groove is to assure that the diamond-like powder material is packed into the groove without any possibility of voids. If the sides of the groove were 90° to the bottom of the groove then the sharp 90° corners could cause stress risers and voids in the diamond-like material.

With reference now to Figure 4, an alternate rotary cutter blank 110 is illustrated with a pair of grooves 118 formed in the blank body 112.

One could also provide diamond end mills with one or more grooves that are substantially parallel to an axis of the mill blank body (not shown).

Further, one could provide cutters across the ends 13 and 113 of the blank bodies 12 and 112 to enhance plunging and milling operations without departing from the scope of this invention.

Referring now to FIGS. 1, 2 and 5, the grooves 18 and 118 are compacted with powder 30 and 130 and sintered in a press. The polycrystalline material is formed in the helical grooves of the tungsten carbide blank body. A solid mass of polycrystaline material in grooves 18 and 118 is thus formed in the blank side walls of the end mill bodies 12 and 112. The end mill blank is then machined, usually by grinding or electrical discharge machining to form the flutes 14. A subsequent grinding or EDM process forms he cutting gage surface or cutting edges 32 on the sides of the blank bodies 12 and 112.

What follows is an example of a process of forming a 3/8 inch (9.5 mm) end mill cutter. Referring now to Fig. 6, a carbide blank having, for example, four flutes formed in the blank, is formed slightly oversize (by up to 1 mm.) on the diameter of the end mill blank. The end mill is machined to the proper diameter after the sintering process is completed. As indicated before, the end mill blank body is preferably formed from a cemented tungsten carbide material. The helically formed groove is formed in the body adjacent each of the flutes with a depth of about 1.2 mm and a width of the groove of about 1.5 mm, the sidewalls 20 transition into rounded bottom 22 of the helical groove to a wider opening at the surface of the flutes 14. As indicated before the groove is so configured to assure that the powder material is packed in the groove without voids.

The powder material is preferably diamond powder having a size range from 3 to 60 microns. The preferred size range of the powder is from 4 to 30 microns. The binder for the diamond powder is cobalt which may be mixed with the diamond powder and packed into the grooves, or which may infiltrate into the diamond powder from adjacent cemented tungsten carbide. A suitable ratio of cobalt to diamond is 6 to 15 percent by weight cobalt. The percentage of cobalt is preferred to be 13 percent. A gap filling material of smaller sized diamond powder may be mixed with the larger particles of diamond. The gap filling diamond powder is preferred to be from 1 to 3 microns in size.

The flutes in the tungsten carbide blank or body are preferably prepared by slightly rounding the corners of the leading edges adjacent to the flutes. The reason for "dulling" the corners at the flutes will become apparent with further discussion of the process. The blank 12 is then placed in a "getter" can or receptacle 31. The mixed diamond powder and cobalt is then packed into the grooves 18. The "getter" is a reactive metal that reacts with contaminates and oxides to facilitate better diamond bonding. The getters combine with impurities in the mix to facilitate or achieve a better bond. A typical getter material is selected from the group consisting of zirconium, columbium, tantalum and hafnium. For example, the receptacle 31 is formed of the columbium getter material and laid over the diamond powder pressed in the grooves formed at both of the flutes. The end mill body in the can is then run through a die 51 to make the blank more compact. The second can 53 of columbium then is run through a die 54 to completely seal the second can 53 over the first can 31. The sealed can containing the blank and now generally designated as 55 is then run through a pre-compact stage 56. The can 55 is first surrounded by salt 57 then is put in a pre-compact press 56 to further compact the can 55. The can is subjected to around 100 ksi (7000 kg/cm₂) in the pre-compact press. The range of force on the can, may be for example, 3500 to 7000 kg/cm². This assures that the blank trapped within the columbium cans 50 and 53 is as dense as possible prior to the sintering process. The compressed can 55 is now ready for the sintering process. The reason the edge's are dulled is to prevent the columbium cans from being cut during the pre-compaction stage.

The can 55 is loaded into a pyrophyllite cube. The cube generally designated as 60 is packed with salt rings 57 and lined with a graphite material 66. The cube 60 is then capped with a titanium disk 65 followed by a mica ring baffle 64 and another titanium disk 63. A relatively thick steel ring 62 surrounds a pyrophyllite cap material 61. Both ends of the pyrophyllite cube have the same assembly, thus closing the can 55 within the salt rings 57 in the center of the pyrophyllite cube 60.

The assembled cube 60 then goes to the press 70. The cube 60 is pressed at a temperature of about 1,300 to 1,600°C at a sufficient pressure to form polycrystalline diamond in situ in the grooves, or about 1 million pounds per square inch (70,000 kg/cm²). The time in the press is approximately 10 minutes. In a specific example, the temperature is gradually increased to 1,400°C over a period of about 4 minutes, the cube 60 is held at temperature of 1,400 to 1,500°C for about 1 minute and then allowed to cool down for approximately 5 minutes. An important aspect of this process is that the heat up be relatively slow with a slow cool down period. This is done primarily to reduce residual stresses within the finished rotary cutter.

The sintered can 55 is subsequently broken out of the pyrophyllite cube 60. The sintered end mill blank body is still housed within the cans 31 and 53 of columbium material. The enclosed end mill blank is then dropped into a bath of fused potassium hydroxide. The potassium hydroxide serves to remove the columbium can material from the blank.

The blank body 12, after the sintering process, is then brazed to a mill shank 16. The blank with attached shank is then ground to the finished diameter prior to grinding the polycrystalline diamond and relief angles as required.

The pre-sintered polycrystalline diamond may be fabricated using a patented process, U.S. Patent No. 4,797,241 assigned to Megadiamond and incorporated herein by reference.

As mentioned above, cubic boron nitride can be used in the fabrication of these mill cutters or the like in the place of diamond without departing from the scope of this invention.

## Claims

1. A rotary cutter (10) having helically extending hard material cutting edges (32) along its length characterized by a rotary cutter blank (12) having at least a pair of helical grooves (18) in side walls of the blank and a hard material (30) selected from the group consisting of polycrystalline diamond and polycrystalline cubic boron nitride within the grooves, the hard material having a cutting edge (32) formed along its leading edge, the polycrystalline hard material being formed in situ within the grooves (18).

2. A rotary cutter as set forth in Claim 1 comprising at least a pair of longitudinally extending flutes (14) along the cutter blank, the polycrystalline hard material in each of the grooves being formed in a leading edge of the cutter blank adjacent a flute.

3. A rotary cutter as set forth in either of Claims 1 or 2 wherein the cutter blank is cemented tungsten carbide.

4. A rotary cutter as recited in any of the preceding claims further comprising a connecting shank (16) made of steel or cemented tungsten carbide brazed to the cutter blank at one end.

5. A rotary cutter as recited in any of the preceding claims wherein the grooves (18) extend helically along the cutter.

6. A process for forming a rotary cutter comprising the steps of:
forming a rotary cutter blank (12) of cemented tungsten carbide, providing a polycrystalline hard material in a helical path along the length of the blank, and
forming a cutting edge (32) along a leading edge of the hard material; and characterized by
forming at least a pair of longitudinally extending grooves (18) in an outside surface of the blank,
filling the grooves with hard material (30) selected from the group consisting of diamond and cubic boron nitride, and
pressing the rotary cutter blank at a sufficient pressure to form polycrystalline diamond or polycrystalline cubic boron nitride in situ within the grooves (18).

7. A process as set forth in Claim 6 further comprising the step of forming longitudinally extending flutes (14) in the rotary cutter blank along a leading edge of the polycrystalline hard material after forming the polycrystalline hard material in situ.

8. A rotary cutter as set forth in any of the preceding claims 1-5 wherein the hard material comprises cubic boron nitride.

## Patentansprüche

1. Rotationsschneidwerkzeug (10) mit sich schraubenförmig entlang seiner Länge erstreckenden Schneidkanten (32) aus hartem Material, gekennzeichnet durch ein Rotationsschneidwerkzeugrohteil (12) mit mindestens einem Paar schraubenförmiger Nuten (18) in den Seitenwänden das Rohteils und einem harten Material (30) innerhalb der Nuten, ausgewählt aus der Gruppe, die aus polykristallinem Diamant und polykristallinem kubischen Bornitrit besteht, wobei das harte Material eine Schneidkante (32) aufweist, welche entlang seiner Vorderkante ausgebildet ist, wobei das polykristalline harte Material in situ in den Nuten (18) geformt wird.

2. Rotationsschneidwerkzeug nach Anspruch 1 mit mindestens einem Paar sich länglich entlang des Schneidwerkzeugrohteil erstreckender Rillen (14), wobei das polykristalline harte Material in jeder der Nuten in einer Vorderkante des Schneidwerkszeugrohteils geformt wird, die benachbart zu einer Rille liegt.

3. Rotationsschneidwerkzeug nach Anspruch 1 oder 2, bei dem das Schneidwerkzeugrohteil aus gesintertem Woframcarbid besteht.

4. Rotationsschneidwerkzeug nach einem der vorhergehenden Ansprüche, weiterhin mit einem verbindenden Schaft (16) aus Stahl oder gesintertem Wolframcarbid, welches an ein Ende der Schneidwerkzeugsschneide hartgelötet ist.

5. Rotationsschneidwerkzeug nach einem der vorhergehenden Ansprüche, bei dem sich die Nuten (18) schraubenförmig entlang des Schneidwerkzeugs erstrecken.

6. Verfahren zum Herstellen eines Rotationsschneidwerkzeuges mit den Schritten:
ein Rotationsschneidwerkzeugrohteil (12) aus gesintertem Wolframcarbid zu formen, wobei polykristallines hartes Material in einem schraubenförmigen Weg entlang der Länge des Rohteils versehen wird, und eine Schneidkante (32) entlang einer Vorderkante des harten Materials zu formen; und
gekennzeichnet durch die Schritte,
mindestens ein Paar sich länglich auf einer Außenoberfläche des Rohteils erstreckender Nuten (18) auszubilden,
die Nuten mit hartem Material (30), ausgewählt aus der Gruppe, die aus Diamant und kubischen Bornitrit besteht, auszufüllen, und
das Rotationsschneidwerkzeugrohteil unter genügendem Druck zu pressen, um in situ polykristallines Diamant und polykristallines kubisches Bornitrit innerhalb der Nuten (18) auszubilden.

7. Verfahren nach Anspruch 6 weiterhin mit dem Schritt, sich längs erstreckende Rillen (14) in dem Schneidwerkzeugrohteil entlang einer Vorderkante des polykristallinen harten Materials nach Bildung des polykristallinen harten Materials in situ auszubilden.

8. Rotationsschneidwerkzeug nach einem der vorhergehenden Ansprüche 1 bis 5, in dem das harte Material kubisches Bornitrit enthält.

## Revendications

1. Outil coupant rotatif (10) présentant des arêtes de coupe (32) en matériau dur s'étendant de façon hélicoïdale suivant sa longueur, caractérisé par une ébauche d'outil coupant rotatif (12) présentant au moins une paire de rainures hélicoïdales (18) dans les parois latérales de l'ébauche et, à l'intérieur des rainures, un matériau dur (30) sélectionné dans le groupe constitué du diamant polycristallin et du nitrure de bore cubique polycristallin, le matériau dur présentant une arête de coupe (32) formée le long de son bord d'attaque, le matériau dur polycristallin étant façonné in situ à l'intérieur des rainures (18).

2. Outil coupant rotatif selon la revendication 1, comportant au moins une paire de gorges (14) s'étendant longitudinalement le long de l'ébauche de l'outil coupant, le matériau dur polycristallin, dans chacune des rainures, étant façonné dans un bord d'attaque de l'ébauche de l'outil coupant, adjacent à une gorge.

3. Outil coupant rotatif selon l'une des revendications 1 ou 2, dans lequel l'ébauche de l'outil coupant est en carbure de tungstène cémenté.

4. Outil coupant rotatif selon l'une quelconque des revendications précédentes, comportant encore une tige de liaison (16) constituée d'acier ou de carbure de tungstène cémenté, brasée à une extrémité de l'ébauche de l'outil coupant.

5. Outil coupant rotatif selon l'une quelconque des revendications précédentes, dans lequel les rainures (18) s'étendent de façon hélicoïdale le long de l'outil coupant.

6. Procédé pour réaliser un outil coupant rotatif, comportant les étapes consistant à:
- former une ébauche d'outil coupant (12) en carbure de tungstène cémenté, avec un matériau dur polycristallin ménagé dans une ligne hélicoïdale agencée suivant la longueur de l'ébauche et
- former une arête de coupe (32) le long d'un bord d'attaque du matériau dur; et caractérisé par
- la formation d'au moins une paire de rainures (18) s'étendant longitudinalement sur une surface extérieure de l'ébauche,
- le remplissage des rainures avec un matériau dur (30) sélectionné dans le groupe constitué du diamant et du nitrure de bore cubique, et
- la compression de l'ébauche de l'outil coupant, avec une pression suffisante pour former in situ du diamant polycristallin ou du nitrure de bore cubique polycristallin à l'intérieur des rainures (18).

7. Procédé selon la revendication 6, comportant encore l'étape consistant à former des gorges (14) s'étendant longitudinalement dans l'ébauche de l'outil coupant rotatif suivant un bord d'attaque du matériau dur polycristallin, après avoir formé in situ le matériau dur polycristallin.

8. Outil coupant rotatif tel que défini dans l'une quelconque des revendications 1 à 5, dans lequel le matériau dur comporte du nitrure de bore cubique.
